# EUROPÄISCHE PATENTSCHRIFT

(11) **EP 2 263 347 B1**
(45) Veröffentlichungstag und Bekanntmachung des Hinweises auf die Patenterteilung: **29.01.2014**
(21) Anmeldenummer: 09717612.7
(22) Anmeldetag: 04.03.2009
(51) Int. Cl.: H04L 7/033, G06F 1/12, H04J 3/06, H04L 7/04, H04L 12/40

(54) **KOMMUNIKATIONSSYSTEM UMFASSEND EINEN DATENBUS UND MEHRERE DARAN ANGESCHLOSSENE TEILNEHMERKNOTEN SOWIE VERFAHREN ZUM BETREIBEN EINES SOLCHEN KOMMUNIKATIONSSYSTEMS**
COMMUNICATION SYSTEM COMPRISING A DATA BUS AND A PLURALITY OF USERS CONNECTED TO SAID BUS, AND A METHOD FOR OPERATING SUCH A COMMUNICATION SYSTEM
RESEAU DE COMMUNICATION COMPRENANT UN BUS DE DONNÉES ET UNE PLURALITÉ D'UTILISATEURS CONNECTÉ À CE BUS, ET UN PROCÉDÉ POUR LE DÉPLOIEMENT D'UN TEL RESEAU

(30) Priorität: 07.03.2008 DE 102008000562
(43) Veröffentlichungstag der Anmeldung: 22.12.2010
(73) Patentinhaber: Robert Bosch GmbH, 70442 Stuttgart (DE)
(72) Erfinder: Hartwich, Florian, 72762 Reutlingen (DE)
(86) Internationale Anmeldenummer: PCT/EP2009/052535
(87) Internationale Veröffentlichungsnummer: WO 2009/109592

(56) Entgegenhaltungen:
- EP-A1- 1 367 762
- EP-A2- 1 564 925
- WO-A1-2008/006613
- US-A1- 2004 156 462
- US-A1- 2005 024 111
- US-A1- 2006 123 176
- PHILIPS SEMICONDUCTORS: "APPLICATION NOTE. P82C150 Serial Linked I/O (SLIO) Device. AN94088" INTERNET CITATION 1. Januar 1995 (1995-01-01), Seite 52PP, XP007908912 Gefunden im Internet: URL:http://www.nxp.com/acrobat_download/ap plicationnotes/AN94088_1.pdf> [gefunden am 2009-06-18] in der Anmeldung erwähnt

## Beschreibung

### Stand der Technik

Die vorliegende Erfindung betrifft ein Kommunikationssystem mit einem Datenbus und mehreren an den Datenbus angeschlossenen Teilnehmerknoten. Eine Datenübertragung über den Datenbus erfolgt in Datenrahmen mit jeweils mindestens einem Datenfeld und mindestens einem Prüfsummenfeld. Mindestens einer der Teilnehmer weist einen hochgenauen Taktgenerator auf, und die übrigen Teilnehmer weisen einen Taktgenerator mit einer geringeren Genauigkeit als der hochgenaue Taktgenerator auf. Während des Betriebs des Kommunikationssystems liegen an dem Datenbus Kalibrationsnachrichten an. Zumindest einer der Teilnehmer mit dem ungenauen Taktgenerator empfängt eine Kalibrationsnachricht und weist ein Kalibrations-Steuerwerk zur Kalibrierung des ungenauen Taktgenerators auf einen Systemtakt des Datenbusses unter Berücksichtigung von in der empfangenen Kalibrationsnachricht enthaltenen Informationen auf. Des weiteren betrifft die Erfindung ein Verfahren zum Betreiben eines solchen Kommunikationssystems.

Aus dem Stand der Technik ist eine einfache und preisgünstige Variante des Controller Area Network (CAN)-Bus, der sogenannte Serial Linked IO (SLIO)-CAN, bekannt. Der SLIO-CAN wurde von der Robert Bosch GmbH entwickelt und unter der Bezeichnung "P82C150" von Philips Semiconductors gefertigt und vertrieben. Nähere Informationen zum SLIO können dem Datenblatt "P82C150" vom 19.06.1996 von Philips Semiconductors entnommen werden. Beim SLIO wird darauf verzichtet, jedem Teilnehmerknoten des Kommunikationssystems einen hochgenauen Taktgenerator, beispielsweise einen Quarz, zuzuordnen. Lediglich der oder die Master-SLIO-Teilnehmerknoten verfügen über einen solchen genauen Taktgenerator. Die übrigen SLIO-Teilnehmerknoten arbeiten mit einem internen RC-Oszillator als Taktgenerator, der ohne externe Elemente wie Quarz oder keramischem Resonator auskommt und deshalb relativ ungenau ist. Um zu einem für die CAN-Kommunikation ausreichend genauen Systemtakt zu gelangen, enthalten die SLIO-Teilnehmerknoten jeweils ein Kalibrations-Steuerwerk, das den relativ ungenauen RC-Takt kalibriert. Die Kalibrierung beim SLIO-CAN erfolgt dabei zweistufig und ist in eine Grobkalibration und eine anschließende Feinkalibration unterteilt. Bei der Grobkalibration beginnt das Kalibrations-Steuerwerk damit, in den empfangenen Bitmustern auf dem CAN-Bus den kleinsten Abstand zwischen zwei aufeinanderfolgenden Flanken von rezessiv nach dominant zu suchen (gemessen in Oszillator-Perioden). Dieser Abstand wird als die Zeit für zwei CAN Bit-Zeiten angenommen und der Takt-Teiler, der den Systemtakt des CAN-Protokoll-Steuerwerks generiert, wird so eingestellt, dass das CAN-Protokoll-Steuerwerk möglichst genau mit dieser CAN Bit-Zeit arbeitet. Die Suche nach kleineren Abständen zwischen zwei aufeinanderfolgenden Flanken von rezessiv nach dominant wird eingestellt, sobald das CAN-Protokoll-Steuerwerk, das mit dem aktuell eingestellten Systemtakt arbeitet, eine empfangene CAN-Nachricht als gültig akzeptiert; die Grobkalibration ist damit abgeschlossen.

Die Feinkalibration des SLIO-CAN erfolgt mittels spezieller Kalibrationsnachrichten, die von einem oder mehreren SLIO-Mastern, die über einen hochgenauen Taktgenerator, beispielsweise in Form eines Quarzes verfügen, regelmäßig über den CAN-Bus übermittelt werden. Die Kalibrationsnachricht ist anhand ihres Message Identifiers (Identifier-Feld des Datenrahmens) eindeutig als Kalibrationsnachricht definiert. Auch der Inhalt der Kalibrationsnachricht, insbesondere der Inhalt des Datenfeldes der Nachricht, ist beim SLIO-CAN fest vorgegeben. Die Kalibrationsnachricht umfasst zwei Flanken von rezessiv nach dominant in einem Abstand von exakt 32 Bit zueinander. Beim Auftreten der ersten Flanke von rezessiv nach dominant wird in den SLIO-Teilnehmern mit RC-Oszillator ein Zähler für die Oszillatortakte gestartet, der beim Auftreten der zweiten Flanke wieder angehalten wird. Es ist beim SLIO-CAN des weiteren vorgegeben, dass 10 Systemtakte (CAN Time Quanta; tq) einer CAN-Bit-Zeit entsprechen. Dies ist in den SLIO-Teilnehmerknoten hardwaremäßig vorgegeben. Nach Empfang der 32 Bit in der Kalibrationsnachricht sollte der Zähler also auf einem Wert stehen, der 320 Systemtakten entspricht. Danach wird ein Teilerverhältnis eines Taktteilers ermittelt, welcher den Oszillatortakt in einen Systemtakt umrechnet. Der Nenner des Taktverhältnisses ist beim SLIO-CAN immer 320. Im Zähler ist der tatsächliche Zählerstand im Anschluss an die 32 Bit enthalten.

Nachteilig bei dem bekannten SLIO ist es also, dass spezielle Kalibrationsnachrichten vorgesehen werden müssen, die einen Teil der Bandbreite des CAN-Busses beanspruchen und nicht zur Übertragung der eigentlichen Nutzdaten verwendet werden können. Damit steht weniger Bandbreite zur Übertragung der Nutzdaten zur Verfügung. Ein weiterer Nachteil des bekannten SLIO ergibt sich daraus, dass ein SLIO-Teilnehmerknoten definitionsgemäß nicht senden kann, auch kein Acknowledge-Bit (ACK), solange er keine gültigen Kalibrationsnachrichten empfangen hat. Das hat zur Folge, dass in dem Fall, dass ein Netzwerk nur aus einem SLIO-Master, der Kalibrationsnachrichten sendet, und mehreren SLIO-Knoten mit RC-Oszillator besteht, der SLIO-Master zuerst in einen sogenannten Error-Passive Zustand geht, bevor die Kommunikation über den CAN-Bus beginnen kann. Solange der SLIO-Master im sogenannten Error-Aktive Zustand ist, zerstört er wegen fehlender Acknowledge-Bits seine eigenen Kalibrationsnachrichten mit aktiven Error-Frames. In einem solchen Fall vergeht relativ viel Zeit, bis mit der Kommunikation über den CAN-Bus begonnen werden kann. Unter Umständen ist es sogar unmöglich, mit der Kommunikation zu beginnen, da es zu keiner Synchronisation der SLIO-Teilnehmerknoten kommt. Diese Probleme sind in der Praxis nur sehr schwer und unter großen Anstrengungen und Kosten zu beherrschen.

Das Dokument US 2005/0024111 offenbart eine LIN (Local Interconnect Network) Implementierung. Es wird eine externe Referenz vorgegeben, nämlich ein definiertes Bitmuster das vor den eigentlichen Daten gesendet wird. Diese Referenz wird benutzt um das Verhältnis einer lokalen Taktuhr zu der externen Referenz zu bestimmen. Des Weiteren wird in Abhängigkeit von dem bestimmten Verhältnis einen programmierbaren Taktteiler zu eingestellt, dass das Ausgangssignal des Teilers mit der externen Referenz synchronisiert ist.

Ausgehend von dem beschriebenen Stand der Technik liegt der vorliegenden Erfindung die Aufgabe zu Grunde, in einem Kommunikationssystem, das Teilnehmerknoten mit relativ ungenauen Taktgeneratoren aufweist, eine einfache und kostengünstige Möglichkeit vorzuschlagen, welche eine schnelle und zuverlässige Kalibrierung der Taktgeneratoren der Teilnehmerknoten auf einen Systemtakt erlaubt.

### Offenbarung der Erfindung

Zur Lösung dieser Aufgabe wird ausgehend von dem Kommunikationssystem der eingangs genannten Art vorgeschlagen, dass die Anzahl (NTQ) an Systemtakten, die in einer Bit-Zeit enthalten sind, frei konfigurierbar ist, dass das Kalibrations-Steuerwerk dazu geeignet ist, in Oszillator-Perioden einen Abstand (NOPN) zwischen einer ersten Flanke im Datenfeld oder im Kontrollfeld eines empfangenen Datenrahmens und einer anderen Flanke in einem Feld des empfangenen Datenrahmens zu messen, die Anzahl (NB) der Bits zwischen diesen beiden Flanken zu zählen und einen Takt-Teiler, der einen Systemtakt eines Datenbus-Protokoll-Steuerwerks des mindestens einen Teilnehmers mit dem ungenauen Taktgenerator generiert, so einzustellen, dass eine Systemtakt-Periode NOPN/(NB·NTQ) Oszillator-Perioden lang ist. Der hochgenaue Taktgenerator umfasst beispielsweise einen hochgenauen Quarz oder einen MEMS (Micro Electric Mechanical System)-Resonator. Der weniger genaue Taktgenerator umfasst beispielsweise einen RC-Oszillator. Selbstverständlich wäre es auch denkbar, einfach billigere und deshalb ungenauere Quarze oder keramische Resonatoren als weniger genaue Oszillatoren einzusetzen. Der Begriff "hochgenau" bedeutet hier lediglich, dass der Taktgenerator genauer als der ungenaue Taktgenerator ist und dass er genau genug ist, um den Systemtakt für das Kommunikationssystem vorzugeben.

Erfindungsgemäß wird also vorgeschlagen, die Anzahl an Systemtakten, die in einer Bit-Zeit enthalten sind, frei zu wählen. Dadurch kann sich auch ein Takt-Teiler mit einem gebrochen rationalen Teiler-Verhältnis ergeben. Durch diese Maßnahme ist es möglich, auf spezielle Kalibrationsnachrichten verzichten zu können. Statt dessen ist es möglich, praktisch jede beliebige über den Datenbus übertragene Nachricht zur Kalibration der Teilnehmerknoten heranzuziehen. Es geht also keine Datenbus-Bandbreite für die Übermittlung spezieller Kalibrationsnachrichten mehr verloren. Die Kalibrationsnachrichten werden vorzugsweise von einem der Teilnehmerknoten mit einem hochgenauen Taktgenerator generiert und/oder über den Datenbus aussandt.

Zum Zwecke der Kalibration misst das Kalibrations-Steuerwerk des mindestens einen zu kalibrierenden Teilnehmerknotens einen Abstand (NOPN) zwischen einer ersten Flanke im Datenfeld eines empfangenen Datenrahmens und einer anderen Flanke in einem Feld des empfangenen Datenrahmens. Der Abstand (NOPN) wird in Oszillator-Perioden gemessen. Des weiteren zählt das Kalibrations-Steuerwerk die Anzahl (NB) der Bits zwischen diesen beiden Flanken und stellt einen Takt-Teiler derart ein, dass eine Systemtakt-Periode NOPN/(NB·NTQ) Oszillator-Perioden lang ist. Der Takt-Teiler generiert einen Systemtakt eines Datenbus-Protokoll-Steuerwerks des mindestens einen zu kalibrierenden Teilnehmers. Die Möglichkeit, einen Takt-Teiler mit gebrochen rationalem Teiler-Verhältnis verwenden zu können, erlaubt es, beliebige Flanken in einem beliebigen empfangenen Datenrahmen zur Kalibration des Teilnehmers heranzuziehen. Vorzugsweise haben die berücksichtigten Flanken jedoch einen möglichst großen Abstand zueinander, da Messfehler von einer Oszillator-Periode sich bei einem großen Abstand der Flanken relativ zueinander prozentual weniger stark auswirken als bei einem kleinen Abstand. Da gemäß der Erfindung für die Übertragung der Kalibrationsnachrichten über den Datenbus keine Bandbreite verlorengeht, können die Nachrichten, die zur Kalibration der Teilnehmer verwendet werden, besonders lang ausgebildet werden, so dass die Kalibration besonders genau ist.

Mit dem Takt-Teiler mit gebrochen rationalem Teiler-Verhältnis ist es möglich, beliebige Bit-Timing-Konfigurationen einzustellen und in jeder empfangenen Nachricht nach dem am besten geeigneten, das heißt am weitesten voneinander entfernten Paar von Flanken, vorzugsweise von rezessiv nach dominant zu suchen. Es muss lediglich feststehen, dass beide berücksichtigten Flanken vom gleichen Teilnehmerknoten (Transmitter) kommen. Für die erste Flanke ist dies gegeben, wenn die Arbitration abgeschlossen ist (zu Beginn des Kontrollfeldes), für die zweite Flanke ist dies gegeben, wenn sie vor dem Ende der Prüfsummen-Sequenz (vor dem CRC Delimiter im Prüfsummenfeld) gemessen wird.

Die betrachtete erste Flanke, die den Start eines Zählers auslöst, ist vorzugsweise die erste im Datenfeld des empfangenen Datenrahmens auftretende Flanke. Es könnte auch eine Flanke im Köntrollfeld als erste Flanke verwendet werden, aber nicht in jedem Datenrahmen gibt es im Kontrollfeld eine Flanke von rezessiv nach dominant. Gemäß einer vorteilhaften Weiterbildung der vorliegenden Erfindung wird deshalb vorgeschlagen, dass das Kalibrations-Steuerwerk dazu geeignet ist, den Abstand (NOPN) zwischen der ersten im Datenfeld des empfangenen Datenrahmens auftretenden Flanke und der anderen Flanke in einem Feld des empfangenen Datenrahmens zu messen. Gemäß dieser Weiterbildung wird also nicht irgendeine Flanke im Datenfeld des empfangenen Datenrahmens, sondern die erste Flanke herangezogen.

Gemäß einer bevorzugten Ausführungsform der Erfindung wird vorgeschlagen, dass das Kalibrations-Steuerwerk dazu geeignet ist, den Abstand (NOPN) zwischen der ersten Flanke und der anderen Flanke in einem anderen Feld, insbesondere in einem Prüfsummenfeld (sogenanntes CRC-Feld), des empfangenen Datenrahmens zu messen. Insbesondere wird vorgeschlagen, dass das Kalibrations-Steuerwerk dazu geeignet ist, den Abstand (NOPN) zwischen der ersten Flanke und der letzten in dem Prüfsummenfeld des empfangenen Datenrahmens auftretenden Flanke zu messen. Selbstverständlich könnte man auch eine andere als die letzte Flanke, bspw. die vorletzte Flanke, im Prüfsummenfeld für die Kalibration heranziehen. Die Verwendung der ersten Flanke in dem Datenfeld des empfangenen Datenrahmens und/oder der letzten Flanke in dem Prüfsummenfeld des empfangenen Datenrahmens ergibt einen besonders großen Abstand zwischen den berücksichtigten Flanken und damit eine größere Genauigkeit der Kalibration. Der relative Messfehler beim Erfassen des Oszillatortakts ist dabei geringer.

Gemäß einer weiteren bevorzugten Ausführungsform der vorliegenden Erfindung wird vorgeschlagen, dass das Kalibrations-Steuerwerk dazu geeignet ist, den Abstand (NOPN) zwischen der ersten Flanke von rezessiv nach dominant und der anderen Flanke von rezessiv nach dominant in einem Feld des empfangenen Datenrahmens zu messen. Die Verwendung der Flanken von rezessiv nach dominant hat den Vorteil, dass diese üblicherweise schärfer bzw. steiler sind als die Flanken von dominant nach rezessiv, so dass der Zeitpunkt der Flanke mit höherer Genauigkeit gemessen werden kann. Die Pegel auf einem CAN-Bus beispielsweise sind "0"-dominant und "1"-rezessiv. Bei einem CAN-Bus würden gemäß dieser Ausführungsform also die Flanken von "1" nach "0" berücksichtigt werden.

Gemäß einer anderen vorteilhaften Weiterbildung der vorliegenden Erfindung wird vorgeschlagen, dass das Datenbus-Protokoll-Steuerwerk des mindestens einen Teilnehmers mit dem ungenauen Oszillator während des Empfangs der Kalibrationsnachricht und während der Kalibrierung des ungenauen Oszillators in einem eingeschränkten Betriebsmodus gehalten ist, der gegenüber einem normalen Datenbus-Betriebsmodus eine eingeschränkte Fehlerdetektions- und Fehlerbehandlungsfunktionalität bezüglich der über den Datenbus empfangenen Datenrahmen aufweist. Der eingeschränkte Betriebsmodus (sogenannter Restricted Mode) soll verhindern, dass ein noch nicht oder nicht mehr richtig kalibrierter Teilnehmerknoten den Datenbus bzw. die Datenübertragung mit Error-Frames oder anderen Nachrichten oder Aktionen stört. Insbesondere wird verhindert, dass zur Kalibration vorgesehene Nachrichten auf dem Datenbus gelöscht werden. Dadurch kann der Aufbau des Kommunikationssystems beziehungsweise die Integration eines weiteren Teilnehmerknotens in ein bestehendes Kommunikationssystem deutlich beschleunigt werden. In manchen Fällen, in denen es bei dem bekannten SLIO-CAN bisher nicht möglich war, überhaupt ein funktionierendes Kommunikationssystem aufzubauen, ist es, dank der vorgeschlagenen Weiterbildung nun erstmals möglich, die Teilnehmerknoten überhaupt zu synchronisieren und so ein funktionierendes Kommunikationssystem aufzubauen. Dies gilt insbesondere für ein Kommunikationssystem, das außer dem SLIO-Master nur noch zu kalibrierende Teilnehmerknoten enthält.

In dem eingeschränkten Betriebsmodus des Protokoll-Steuerwerks ist insbesondere ein Fehlerzähler des mindestens einen zu kalibrierenden Teilnehmers angehalten. Dies kann für den Fehlerzähler zum Senden (Tx Error Counter) sowie für den Fehlerzähler zum Empfangen (Rx Error Counter) gelten. Des weiteren sendet der mindestens eine zu kalibrierende Teilnehmer mit dem ungenauen Oszillator in dem eingeschränkten Betriebsmodus eine Nachricht, insbesondere eine Bestätigungsnachricht (Acknowledge-Bit; ACK), wenn er einen fehlerfreien Datenrahmen über den Datenbus empfangen hat. Es ist denkbar, dass der zu kalibrierende Teilnehmer nur dann ein ACK-Bit aussendet, wenn er einen zur Kalibrierung des ungenauen Oszillators nutzbaren Datenrahmens empfangen hat. Im eingeschränkten Betriebsmodus ist es den Teilnehmerknoten des erfindungsgemäßen Kommunikationssystems - im Gegensatz zu den aus dem Stand der Technik bekannten SLIO-Knoten - also möglich, Bestätigungsnachrichten (ACK) zu senden, obwohl die Kalibration noch nicht abgeschlossen ist. Es ist praktisch ausgeschlossen, dass ein fehl-kalibrierter Teilnehmerknoten irgendeinen Bit-Strom am Bus fälschlicherweise als gültige Nachricht ansieht.

Des weiteren ist vorgeschlagen, dass in dem eingeschränkten Betriebsmodus das Zerstören eines über den Datenbus empfangenen und als fehlerhafte Nachricht erkannten Datenrahmens unterbunden ist. Die Teilnehmerknoten des Kommunikationssystems können also keine aktiven Error-Frames und/oder keine Overload-Frames senden. Dadurch wird verhindert, dass ein Teilnehmerknoten, der beim erstmaligen Aufbau eines funktionierenden synchronisierten Kommunikationssystems einen Systemtakt vorgibt, aufgrund fehlender Bestätigungsnachrichten seine eigenen Datenrahmen, die als Kalibrationsnachrichten Verwendung finden sollen, zerstört. Ein weiterer Vorteil besteht darin, dass eine reguläre Datenübertragung über den Datenbus zwischen bereits synchronisierten Teilnehmerknoten durch einen noch nicht oder nicht mehr richtig kalibrierten Teilnehmerknoten nicht gestört wird.

Gemäß einer weiteren bevorzugten Ausführungsform der vorliegenden Erfindung wird vorgeschlagen, dass nur solche Datenrahmen zur Kalibrierung des ungenauen Oszillators herangezogen werden, die von Teilnehmern mit einem besonders genauen Taktgenerator ausgesandt wurden. Es sind dies insbesondere solche Teilnehmer, die über einen Quarz als Taktgenerator verfügen. Welche der an den Datenbus angeschlossenen Teilnehmerknoten dies im Einzelnen sind, ist dem Systementwickler bekannt, so dass er das Kalibrations-Stellwerk dementsprechend konfigurieren oder programmieren kann. Von welchem der Teilnehmerknoten ein empfangener Datenrahmen ausgesandt wurde, kann in dem empfangenden Teilnehmer beispielsweise anhand einer im Datenrahmen enthaltenen Kennung (sogenannte Message-ID im sog. Identifier-Feld) festgestellt werden. Mit dieser Ausgestaltung der vorliegenden Erfindung können die zu kalibrierenden Teilnehmerknoten mit einer besonders hohen Genauigkeit kalibriert werden.

Gemäß einer anderen bevorzugten Ausgestaltung der vorliegenden Erfindung wird vorgeschlagen, dass nur solche Datenrahmen zur Kalibrierung des ungenauen Oszillators des zu kalibrierenden Teilnehmerknotens herangezogen werden, die länger als ein vorgebbarer Grenzwert sind. In kürzeren Datenrahmen ist das Datenfeld zwangsläufig kürzer als in längeren Datenrahmen. Damit ist in kürzeren Datenrahmen zwangsläufig auch der maximale Abstand zwischen den beiden betrachteten Flanken im Datenfeld beziehungsweise im Prüfsummenfeld kleiner als bei längeren Datenrahmen. Mit der vorgeschlagenen Ausgestaltung wird dafür gesorgt, dass ledig solche Datenrahmen zur Kalibrierung herangezogen werden, bei denen der Abstand zwischen den beiden betrachteten Flanken eine bestimmte Mindestgröße aufweist, um die Kalibrierung mit einer bestimmten Mindestgenauigkeit ausführen zu können.

Des weiteren wird vorgeschlagen, dass das Kalibrations-Steuerwerk dazu geeignet ist, aus den Messungen des Abstands (NOPN) zwischen der ersten Flanke und der anderen Flanke mehrerer empfangener Datenrahmen einen Mittelwert zu bilden und den Takt-Teiler in Abhängigkeit von diesem Mittelwert einzustellen. Mit diesem Vorschlag können Ungenauigkeiten bei der Messung des Abstands zwischen den betrachteten Flanken über mehrere empfangene Datenrahmen ausgemittelt werden, was ebenfalls zu einer Verbesserung der Genauigkeit der Kalibrierung führen kann.

Gemäß einer weiteren Ausgestaltung der vorliegenden Erfindung wird vorgeschlagen, dass das Kalibrations-Steuerwerk dazu geeignet ist, wenn für eine vorgebbare Zeitdauer ein fehlerfreier und zur Kalibrierung des ungenauen Oszillators nutzbarer Datenrahmen ausbleibt oder wenn die Anzahl der Re-Synchronisationen beim Empfang der Datenrahmen über den Datenbus einen vorgebbaren Grenzwert überschreitet, über den Datenbus einen zur Kalibrierung des ungenauen Oszillators nutzbaren Datenrahmen anzufordern. Mit dieser Ausgestaltung wird sichergestellt, dass auf jeden Fall von Zeit zu Zeit eine Kalibrierung der Teilnehmerknoten mit ungenauem Oszillator erfolgt, um zu verhindern, dass sich nach einem längeren Betrieb der Teilnehmerknoten ohne Kalibrierung der Oszillator-Takt so weit verändert, dass der eingestellte Wert für den Takt-Teiler nicht mehr einen dem Systemtakt des Datenbus-Protokoll-Steuerwerks des Teilnehmers entsprechenden Takt generieren kann. Im Extremfall kann es bei zu stark variierendem Oszillator-Takt und fehlender Kalibration sogar dazu kommen, dass der Teilnehmerknoten keine Datenrahmen mehr über den Datenbus empfangen kann. Insbesondere Temperaturschwankungen, Versorgungsspannungsschwankungen sowie Alterungserscheinungen können zu Schwankungen des von dem RC-Oszillator generierten Oszillatortakts führen. Diese Schwankungen des Oszillatortakts gilt es durch regelmäßige Kalibration zu kompensieren.

Gemäß einer besonders bevorzugten Ausführungsform der vorliegenden Erfindung wird vorgeschlagen, dass die beschriebene Kalibrierung des ungenauen Oszillators des mindestens einen Teilnehmers mit dem ungenauen Oszillator eine Feinkalibrierung darstellt, welche im Anschluss an eine Grobkalibrierung ausgeführt wird. Gemäß dieser Ausgestaltung der vorliegenden Erfindung wird das Kommunikationssystem beziehungsweise werden die Teilnehmerknoten des Kommunikationssystems, die über keinen eigenen Quarz als Taktgenerator bzw. lediglich über einen ungenauen Quarz verfügen, zunächst einer Grobkalibrierung unterzogen. Die Grobkalibrierung erfolgt insbesondere beim Hochfahren (sogenannter Start Up) des Kommunikationssystems oder wenn einer oder mehrere Teilnehmerknoten in ein bereits bestehendes Kommunikationssystem integriert werden sollen. Die Grobkalibrierung erlaubt es den Teilnehmern zunächst einmal überhaupt Datenrahmen über den Datenbus zu empfangen. Anhand der empfangenen beziehungsweise ausgewählter empfangener Datenrahmen erfolgt dann die Feinkalibrierung in der oben beschriebenen Weise.

Vorteilhafterweise ist das Kalibrations-Steuerwerk zur Grobkalibrierung des ungenauen Oszillators dazu geeignet, in den empfangenen Datenrahmen nach dem in Oszillator-Perioden kleinsten Abstand (NOP2) zwischen zwei aufeinanderfolgenden Flanken zu suchen, den Abstand (NOP2) als Zeit für zwei Bit-Zeiten heranzuziehen und den Takt-Teiler so einzustellen, dass eine Systemtakt-Periode NOP2/(2·NTQ) Oszillator-Perioden lang ist. Der Takt-Teiler, der den System-Takt des Protokoll-Steuerwerks generiert, wird also so eingestellt, dass das Protokoll-Steuerwerk möglichst genau mit der ermittelten Bit-Zeit operiert. Die Suche nach kleineren Abständen zwischen zwei aufeinanderfolgenden Flanken wird eingestellt, sobald das Protokoll-Steuerwerk, das mit dem aktuell eingestellten Systemtakt arbeitet, einen empfangenen Datenrahmen als gültige Nachricht bzw. eine vorgebbare Anzahl an empfangenen Datenrahmen als gültige Nachrichten akzeptiert; das Kalibrations-Steuerwerk ist jetzt grob kalibriert. Selbstverständlich ist die Grobkalibrierung nicht auf die Verwendung von zwei Bit-Zeiten beschränkt, sondern kann praktisch mit einer beliebigen Anzahl n an Bit-Zeiten durchgeführt werden. In diesem Fall wäre der Takt-Teiler dann so einzustellen, dass eine Systemtakt-Periode NOP2/(n·NTQ) Oszillator-Perioden lang ist. Vorzugsweise werden bei der Grobkalibrierung zwei aufeinanderfolgende Flanken von rezessiv nach dominant betrachtet, da sich bei diesem Übergang schärfere Flanken ergeben und die Flanken somit genauer detektiert werden können.

Gemäß einer anderen bevorzugten Weiterbildung der vorliegenden Erfindung wird vorgeschlagen, dass das Kommunikationssystem als ein CAN-Kommunikationssystem ausgebildet ist. In diesem können Daten beispielsweise nach dem CAN-Protokoll übertragen werden. Vorzugsweise erfolgt die Datenübertragung in dem CAN-Kommunikationssystem über den Datenbus nach dem TTCAN-Protokoll, das als zusätzliche Protokollschicht oberhalb des CAN-Protokolls ausgebildet ist. Durch das TTCAN-Protokoll wird eine zeitgesteuerte deterministische Übertragung der Datenrahmen über den CAN-Bus ermöglicht.

Als eine weitere Lösung der Aufgabe der vorliegenden Erfindung wird ausgehend von dem Verfahren zum Betreiben eines Kommunikationssystems der eingangs genannten Art vorgeschlagen, dass die Anzahl (NTQ) an Systemtakten, die in einer Bit-Zeit enthalten sind, frei konfigurierbar ist, dass in Oszillator-Perioden ein Abstand (NOPN) zwischen einer ersten Flanke im Datenfeld eines empfangenen Datenrahmens und einer anderen Flanke in einem Feld des empfangenen Datenrahmens gemessen wird, die Anzahl (NB) der Bits zwischen diesen beiden Flanken gezählt wird und ein Takt-Teiler, der einen Systemtakt eines Datenbus-Protokoll-Steuerwerks generiert, so eingestellt wird, dass eine Systemtakt-Periode NOPN/(NB·NTQ) Oszillator-Perioden lang ist.

Selbstverständlich muss die Konfiguration der Anzahl (NTQ) an Systemtakten, die in einer Bit-Zeit enthalten sind, gemäß dem in dem Kommunikationssystem zur Datenübertragung verwendeten Protokoll erfolgen. So erlaubt beispielsweise das CAN-Protokoll, dass in einer Bit-Zeit zwischen 4 und 25 Systemtakte enthalten sind. Wie die Anzahl (NTQ) an Systemtakten, die in einer Bit-Zeit enthalten sind, konfiguriert wird, hängt vom Einzelfall ab. So ist die Anzahl (NTQ) beispielsweise abhängig von der Taktfrequenz des Taktgenerators, von der Datenrate, mit der die Daten über den Datenbus übertragen werden, sowie - ganz allgemein ausgedrückt - von den physikalischen Gegebenheiten in dem Kommunikationssystem.

Ein bevorzugtes Ausführungsbeispiel der vorliegenden Erfindung wird nachfolgend unter Bezugnahme auf die Figuren näher erläutert. Es zeigen:
- Figur 1: Ein erfindungsgemäßes Kommunikationssystem gemäß einer bevorzugten Ausführungsform;
- Figur 2: den Aufbau eines CAN-Datenrahmens;
- Figur 3: den Aufbau eines erweiterten CAN-Datenrahmens;
- Figur 4: ein Ablaufdiagramm eines erfindungsgemäßen Verfahrens zum Betreiben eines Kommunikationssystems gemäß einer bevorzugten Ausführungsform; und
- Figur 5: ein Ablaufdiagramm einer Feinkalibrierung eines Teilnehmerknotens des Kommunikationssystems aus Figur 1.

### Beschreibung der Ausführungsbeispiele

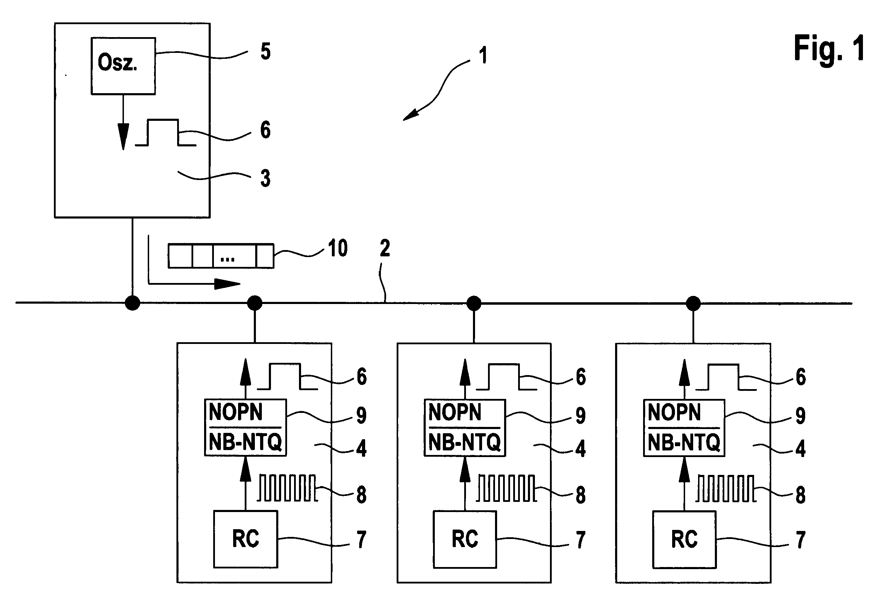

In Figur 1 ist ein erfindungsgemäßes Kommunikationssystem in seiner Gesamtheit mit dem Bezugszeichen 1 bezeichnet. Das Kommunikationssystem umfasst einen Datenbus 2, an den mehrere Teilnehmerknoten 3, 4 angeschlossen sind. Der Teilnehmerknoten 3 weist einen als Quarz beziehungsweise Quarz-Oszillator 5 ausgebildeten Taktgenerator auf. Dieser gibt ein Taktsignal 6 aus, das einem Systemtakt des Datenbusses 2 entspricht. Die übrigen Teilnehmerknoten 4 weisen einen als RC-Oszillator 7 ausgebildeten Taktgenerator auf. Der RC-Oszillator sendet ein Oszillator-Taktsignal 8 aus, das von dem Systemtakt 6 abweicht. Aus diesem Grund muss das Oszillator-Taktsignal 8 erst durch einen Takt-Teiler 9 in den Systemtakt 6 umgewandelt werden. Das Teilerverhältnis des Takt-Teilers 9 wird im Rahmen einer Kalibration der Teilnehmerknoten 4 eingestellt; die Teilnehmer 4 werden auf den Systemtakt 6 des Datenbusses 2 synchronisiert.

Das in Figur 1 dargestellte Kommunikationssystem hat gegenüber herkömmlichen Kommunikationssystemen, bei denen üblicherweise sämtliche Teilnehmerknoten über einen eigenen Quarz beziehungsweise Quarz-Oszillator als Taktgenerator verfügen, den Vorteil, dass das Kommunikationssystem 1, insbesondere die Teilnehmerknoten 4 besonders einfach und kostengünstig ausgestaltet werden können. Das Kommunikationssystem 1 eignet sich insbesondere für einfachere Anwendungen beispielsweise in Kraftfahrzeugen, Flugzeugen, Luftfahrzeugen oder Werkzeugmaschinen, bei denen mittlere Datenübertragungsraten im Bereich von beispielsweise 250 kBit ausreichend sind. Selbstverständlich können mit dem erfindungsgemäßen Kommunikationssystem bei entsprechender Ausgestaltung auch höhere Datenraten erzielt werden. Das Kommunikationssystem 1 ist beispielsweise als ein CAN (Controller Area Network)-Kommunikationssystem ausgebildet, wobei die Daten nach einem CAN-Protokoll über den CAN-Bus 2 in Datenrahmen 10 übertragen werden. Vorzugsweise erfolgt die Datenübertragung über den CAN-Bus 2 nach dem TTCAN (Time Triggered CAN)-Protokoll, das als eine zusätzliche Protokollschicht auf dem CAN-Protokoll ausgebildet ist und eine zeitgesteuerte, deterministische Datenübertragung über den CAN-Bus 2 ermöglicht.

Wenn das Kommunikationssystem 1 mit mehreren daran angeschlossenen Teilnehmerknoten 3, 4 hochgefahren wird (sogenannter Start Up) oder wenn einer der Teilnehmerknoten 4, beispielsweise nach einem Reset oder zur erstmaligen Integration in das Kommunikationssystem 1, in das bestehende Kommunikationssystem 1 integriert wird, ist es erforderlich, das Teilerverhältnis der Takt-Teiler 9 so einzustellen, dass aus dem Oszillator-Taktsignal 8 das Systemtaktsignal 6 des Datenbusses 2 generiert wird. Der oder die Teilnehmerknoten 4 mit einem RC-Oszillator 7 müssen also auf den Systemtakt 6 synchronisiert werden, was im Rahmen einer Kalibration erfolgt. Da das Oszillatorsignal 8 der RC-Oszillatoren 7 während des Betriebs des Kommunikationssystems 1 starken Schwankungen unterworfen sein kann, müssen die Teilnehmerknoten 4 auch während des laufenden Betriebs des Kommunikationssystems 1 von Zeit zu Zeit synchronisiert werden, das heißt auch während des Betriebs des Kommunikationssystems 1 müssen die Teilnehmerknoten 4 eine Kalibrationsphase durchlaufen. Gründe für eine Variation des Oszillator-Taktsignals 8 können Temperaturschwankungen, Schwankungen der Versorgungsspannung, aber auch Alterungserscheinungen sein.

Die Kalibration der Teilnehmerknoten 4 erfolgt anhand von Kalibrationsnachrichten, die über den Datenbus 2 übertragen werden. Diese Kalibrationsnachrichten werden von dem oder den Teilnehmern 4 empfangen und zur Kalibrierung des RC-Oszillators 7 auf den Systemtakt 6 des Datenbusses 2 herangezogen. Gemäß der vorliegenden Erfindung können ganz normale Nachrichten, das heißt praktisch alle Datenrahmen 10, als Kalibrationsnachricht verwendet werden. Es bedarf also keiner spezieller Kalibrationsnachrichten mit einer speziellen Identifikation (ID) und/oder spezieller Nutzdaten zur Kalibration der Teilnehmer 4.

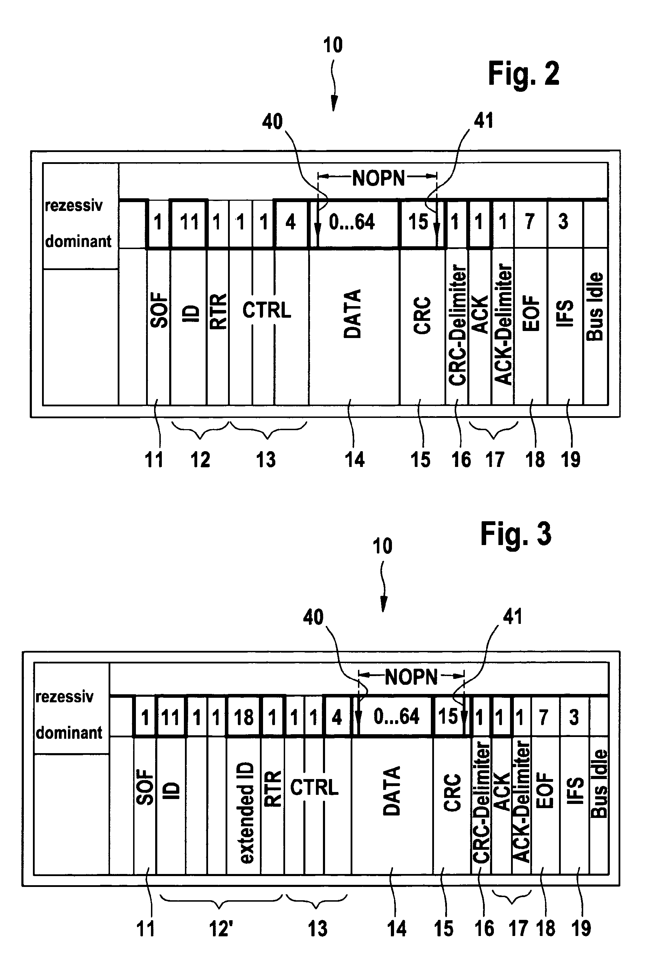

Nachfolgend werden anhand der Figuren 2 und 3 am Beispiel verschiedener CAN-Datenrahmen zwei Möglichkeiten für einen Aufbau der Datenrahmen 10 näher erläutert. Selbstverständlich können die zur Kalibrierung der Teilnehmer 4 gemäß der vorliegenden Erfindung herangezogenen Datenrahmen 10 auch einen von dem in den Figuren 2 und 3 dargestellten Aufbau abweichenden Aufbau aufweisen. Insbesondere Anzahl, Art und Aufbau der verschiedenen Felder eines Datenrahmens 10 im Bereich des sogenannten Headers vor einem Datenfeld mit Nutzdaten und im Bereich eines sogenannten Trailers nach dem Datenfeld können von dem in den Figuren 2 und 3 gezeigten Aufbau abweichen.

Die Übertragung der Daten über den Datenbus 2 erfolgt so, dass ein Bit, je nach Zustand, entweder dominant oder rezessiv auf die Leitungen des Datenbusses 2 wirkt. Ein dominantes Bit überschreibt dabei ein rezessives Bit. Bei CAN ist "0" dominant und "1" rezessiv. Der Datenrahmen 10 wird auch als Frame bezeichnet. Es gibt in CAN vier verschiedene Arten von Frames:
- Ein Daten-Frame dient zum Transport von bis zu 8 Byte (64Bit) an Nutzdaten.
- Ein Remote-Frame dient zur Anforderung eines Daten-Frames von einem anderen Teilnehmer 3, 4.
- Ein Error-Frame signalisiert allen Teilnehmern 3, 4 eine erkannte Fehlerbedingung in der Übertragung.
- Ein Overload-Frame dient als Zwangspause zwischen schnell aufeinander folgenden Daten- und Remote-Frames.

In den Figuren 2 und 3 sind Beispiele für den Aufbau von Daten-Frames 10 dargestellt. Ein Daten-Frame 10 ist logisch wie folgt aufgebaut:
- Start of Frame (SOF) 11, das ein dominantes Bit umfasst.
- Arbitrierungsfeld 12 bestehend aus einem Identifier-Segment (11 Bit) zuzüglich eines RTR (Remote Transmission Request)-Bits.
- Kontrollfeld (CTRL) 13 umfassend 6 Bit.
- Datenfeld (DATA) 14 zur Übertragung der Nutzdaten umfassen 0 bis 64 Bit in Einheiten von 8 Bit gleich 1 Byte.
- Prüfsummenfeld (CRC) umfassend 16 Bit (15Bit CRC Sequenz 15 zuzüglich eines rezessiven CRC-Delimiter-Bits 16.
- Bestätigungsfeld (ACK) 17 umfassend 2 Bit, bestehend aus einem ACK-Slot zuzüglich eines rezessiven ACK-Delimiters.
- End öf Frame (EOF) 18 umfassen 7 Bit (rezessiv).
- Intermission (IFS: Intermission Frame Space) 19 umfassend 3 Bit, entspricht der minimalen Anzahl der Bits, die aufeinanderfolgende Botschaften trennt.

Bei dem in Figur 3 dargestellten sogenannten erweiterten Datenrahmen 10 (Extended Frame) umfasst das Arbitrierungsfeld 12' ein Identifier-Segment mit 29 plus 2 Bit zuzüglich eines RTR-Bits. Ansonsten weist der Datenrahmen 10 aus Figur 3 den gleichen Aufbau auf, wie der Datenrahmen 10 aus Figur 2.

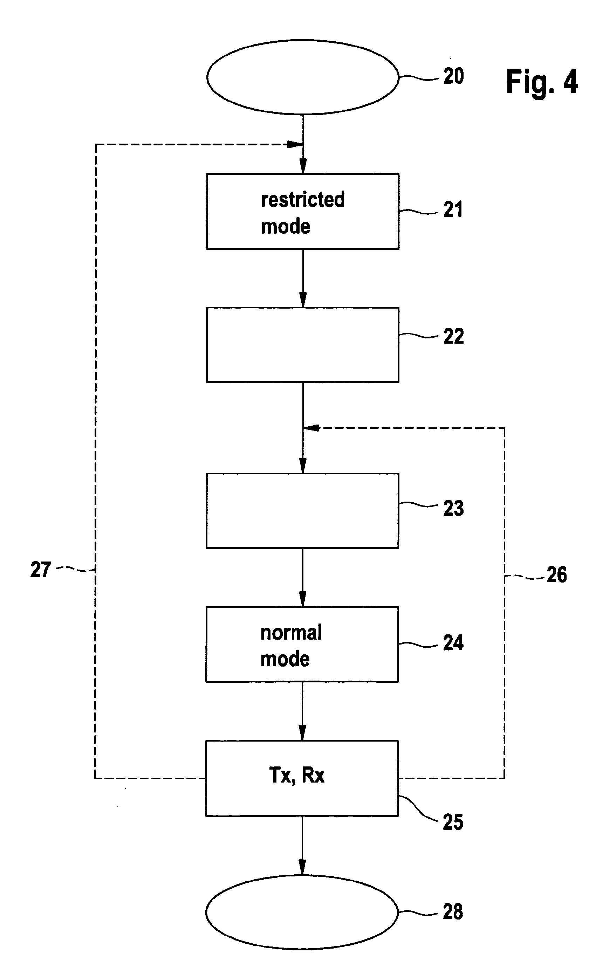

In Figur 4 ist ein Ablaufdiagramm eines erfindungsgemäßen Verfahrens zum Betreiben eines Kommunikationssystems 1 gemäß einem bevorzugten Ausführungsbeispiel dargestellt. Das Verfahren wird in dem Kommunikationssystem 1 ausgeführt, das in seiner Gesamtheit hochgefahren wird. Oder aber das Verfahren wird lediglich in einem oder mehreren der Teilnehmerknoten 4 ausgeführt, der bzw. die in ein bereits etabliertes und synchronisiertes Kommunikationssystem 1 integriert werden soll bzw. sollen. Eine Integration eines Teilnehmerknotens 4 in ein bestehendes Kommunikationssystem 1 ist beispielsweise erforderlich, wenn der Teilnehmerknoten 4 aufgrund eines Reset vorübergehend vom Kommunikationssystem 1 ausgeschlossen war oder aber, falls der Teilnehmerknoten 4 als zusätzlicher Knoten an den Datenbus 2 neu angeschlossen wird.

Das Verfahren beginnt in einem Verfahrensschritt 20. Zu Beginn ist die Frequenz des internen RC-Oszillators 7 nicht genau bekannt. Eine Variable NTQ wird vorab konfiguriert und legt fest, wie viele Systemtakte (sogenannte CAN Time Quanta) t_{q} in einer CAN Bit-Zeit enthalten sein sollen. Gemäß CAN-Protokoll können zwischen 4 und 25 Time Quanta in einer Bit-Zeit enthalten sein. Das in dem Takt-Teiler 9 einzustellende Teilerverhältnis zwischen Oszillator-Periode 8 und Systemtakt-Periode 6 muss ermittelt und eingestellt werden. Dabei sind gemäß der Erfindung auch gebrochen rationale Teilerverhältnisse möglich.

In einem nachfolgenden Verfahrensschritt 21 werden der oder die Teilnehmer 4 des Kommunikationssystems 1 beziehungsweise das CAN-Protokoll-Steuerwerk des oder der Teilnehmer 4 in einen eingeschränkten Betriebsmodus geschaltet, der gegenüber einem normalen Betriebsmodus eine eingeschränkte Fehlerdetektions- und Fehlerbehandlungsfunktionalität bezüglich der über den Datenbus 2 empfangenen Datenrahmen 10 aufweist. Insbesondere sind in dem eingeschränkten Betriebsmodus ein Sende- (Transmit; Tx) und/oder ein Empfangs- (Receive; Rx)-Fehlerzähler des mindestens einen Teilnehmers 4 angehalten. Der Fehlerzähler wird also selbst dann nicht inkrementiert beziehungsweise dekrementiert, wenn das Protokoll-Steuerwerk eine fehlerhafte Nachricht auf dem Datenbus 2 gesehen hat. Dadurch soll verhindert werden, dass ein noch nicht (oder nicht mehr) richtig kalibrierter Teilnehmerknoten 4 den Datenbus 2 mit Error-Frames oder anderen Aktionen stört. Im eingeschränkten Betriebsmodus kann ein Teilnehmerknoten 4 nur eine Bestätigungsnachricht (Acknowledge-Bit; ACK) senden. Dieses Bit wird selbstverständlich nur dann gesendet, wenn der Knoten 4 eine fehlerfreie Nachricht am Bus 2 gesehen hat. Es ist praktisch ausgeschlossen, dass ein fehlkalibrierter Teilnehmerknoten 4 irgendeinen Bit-Strom fälschlicherweise als gültige Nachricht ansieht.

Damit unterscheidet sich das erfindungsgemäße Kommunikationssystem 1 von dem aus dem Stand der Technik bekannten SLIO-CAN, bei dem die Teilnehmer vor der Feinkalibrierung nicht einmal eine Bestätigungsnachricht (ACK) senden können, was die Inbetriebnahme eines Netzwerks, das aus den SLIO-Teilnehmerknoten nur einen anderen SLIO-Masterknoten enthält. Mit dem Umschalten der Teilnehmerknoten 3, 4 auf den eingeschränkten Betriebsmodus während der Kalibrierung des Teilnehmerknotens 4 wird also die Inbetriebnahme des erfindungsgemäßen Kommunikationssystems 1 deutlich vereinfacht und beschleunigt.

Anschließend erfolgt in einem Verfahrensschritt 22 zunächst die Grobkalibrierung des Teilnehmers 4. Ein Kalibrations-Steuerwerk des Teilnehmers 4 beginnt damit, in den empfangenen Bitmustern auf den CAN-Bus 2 den kleinsten Abstand zwischen zwei aufeinanderfolgenden Flanken von rezessiv nach dominant zu suchen (gemessen in Oszillator-Perioden 8). Dieser Abstand NOP2 wird für die Zeit für zwei CAN Bit-Zeiten angenommen, und der Takt-Teiler 9, der den System-Takt 6 des CAN-Protokoll-Steuerwerks generiert, wird so eingestellt, dass das CAN-Protokoll-Steuerwerk möglichst genau mit dieser CAN-Bit-Zeit arbeitet. Der Takt-Teiler 9 wird also so eingestellt, dass eine Systemtakt-Periode NOP2/(2·NTQ) Oszillator-Perioden lang ist. Das Kalibrations-Steuerwerk sucht so lange nach kleineren Abständen zwischen zwei aufeinanderfolgenden Flanken von rezessiv nach dominant, bis das CAN-Protokoll-Steuerwerk, das mit dem aktuell eingestellten Systemtakt 6 arbeitet, eine empfangene CAN-Nachricht als gültig akzeptiert. Damit ist das Kalibrations-Steuerwerk grob kalibriert. Der grob kalibrierte Teilnehmer 4 kann Datenrahmen 10 über den Datenbus 2 empfangen.

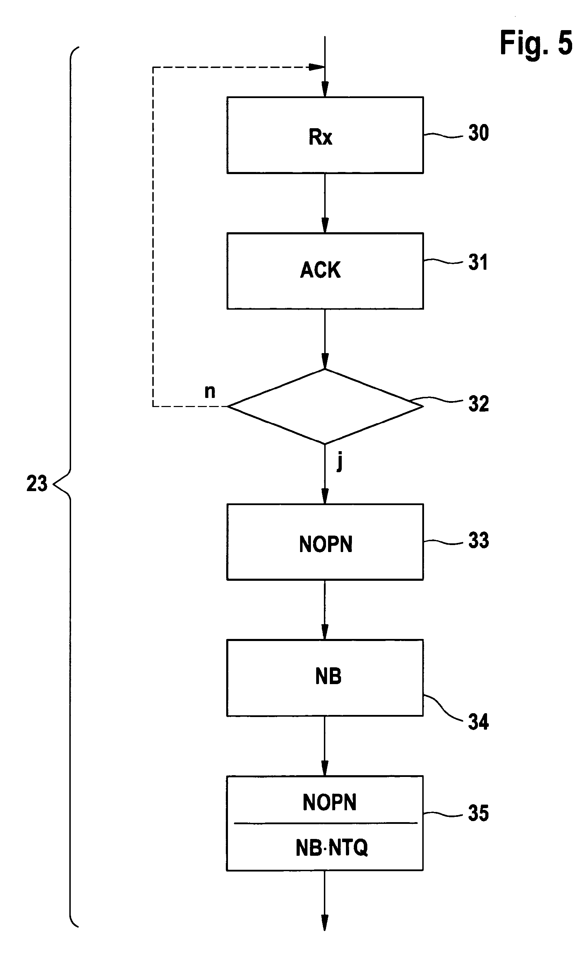

Anschließend erfolgt in einem Verfahrensschritt 23 eine Feinkalibration des Teilnehmers 4. Diese wird nachfolgend anhand der Figur 5 im Detail erläutert. Der fein kalibrierte Teilnehmerknoten 4 kann nicht nur Datenrahmen 10 über den Datenbus 2 empfangen, sondern auch selbst Datenrahmen 10 über den Datenbus 2 versenden. Im Anschluss an die Feinkalibrierung tritt das Kommunikationssystem 1 in einen normalen Betriebsmodus (sog. Normal Mode) über, der in Figur 4 durch den Verfahrensschritt 24 veranschaulicht ist. Während des normalen Betriebsmodus können die Teilnehmer 3, 4 des Kommunikationssystems 1 auf an sich bekannte Weise nach dem CAN-Protokoll oder einem beliebig anderen zur Datenübertragung über den Datenbus 2 verwendeten Protokoll Nachrichten austauschen (vgl. Verfahrensschritt 25. Auch während des normalen Betriebs des Kommunikationssystems 1 muss von Zeit zu Zeit eine Kalibrationsphase durchlaufen werden, was durch den gestrichelten Pfeil 26 verdeutlicht ist. Die Feinkalibration des Teilnehmers 4 im Verfahrensschritt 23 kann zyklisch in regelmäßigen Abständen oder ereignisgesteuert bei Bedarf erfolgen. Ebenso kann es von Zeit zu Zeit erforderlich sein, die gesamte Kalibration einschließlich Grobkalibrierung 22 und Feinkalibrierung 23 durchzuführen, was durch den gestrichelten Pfeil 27 verdeutlicht ist.

Wenn die Datenübertragung in dem Kommunikationssystem 1 beendet ist und das Kommunikationssystem 1 wieder heruntergefahren wird, wird zum Ende des erfindungsgemäßen Verfahrens zu dem Verfahrensschritt 28 übergegangen.

Vorzugsweise wird das Protokoll-Steuerwerk des Teilnehmers 4 in dem eingeschränkten Betriebsmodus (Restricted Mode) gehalten, bis die Feinkalibrierung abgeschlossen ist. Allerdings ist es keine Voraussetzung für die Durchführung der Feinkalibrierung, dass sich das Protokoll-Steuerwerk in dem eingeschränkten Betriebsmodus befindet. Der eingeschränkte Betriebsmodus ist - wie gesagt - insbesondere für die Grobkalibrierung zu Beginn des Kalibrierungsverfahrens von Bedeutung, da während der Grobkalibrierung aufgrund des eingeschränkten Betriebsmodus der Aufbau des Kommunikationssystems 1 beziehungsweise die Integration eines Teilnehmerknotens 4 in ein bestehendes Kommunikationssystem 1 deutlich vereinfacht und beschleunigt werden kann. Nur in dem eingeschränkten Betriebsmodus kann das Protokoll-Steuerwerk noch vor Abschluss der Feinkalibration dem Sender 3 der Kalibrationsnachricht eine Bestätigungsnachricht (ACK) übermitteln. Gleichzeitig kann das Protokoll-Steuerwerk des Teilnehmers 4 keine Nachricht durch ein aktives Error-Flag zerstören, und es könnte keiner andere Nachricht als eine Bestätigungsnachricht senden. Zudem kann das Protokoll-Steuerwerk während des eingeschränkten Betriebsmodus auch nicht durch falsch verstandene Nachrichten in den Error-Passiv Zustand oder einen Bus-Off Zustand gesetzt werden, da im eingeschränkten Betriebsmodus die Fehlerzähler eingefroren sind. Vorzugsweise nach Abschluss der Feinkalibrierung wird das Protokoll-Steuerwerk wieder in den normalen Betriebsmodus versetzt (vergleiche Verfahrensschritt 25 in Figur 4).

Nachfolgend wird das erfindungsgemäße Verfahren, insbesondere die Feinkalibrierung des Teilnehmers 4, anhand der Figur 5 näher erläutert. In einem ersten Verfahrensschritt 30 des Ablaufs zur Feinkalibration empfängt das Protokoll-Steuerwerk des Teilnehmers 4 Datenrahmen 10 über den Datenbus 2. Für jede fehlerfrei empfangene CAN-Nachricht wird in einem nachfolgenden Verfahrensschritt 31 eine Bestätigungsnachricht (ACK-Bit) gesendet. Diese wird von demjenigen Teilnehmerknoten 3 empfangen, der die im Schritt 30 empfangene Kalibrationsnachricht ausgesandt hat.

Anschließend wird in einem Abfrageschritt 32 überprüft, ob der empfangene Datenrahmen 10 zur Verwendung als Kalibrationsnachricht geeignet ist. Ungeeignet sind beispielsweise solche Nachrichten, die von einem Teilnehmer 3, 4 des Kommunikationssystems 1 kommen, von dem bekannt ist, dass sein Takt weniger genau ist, zum Beispiel von einem anderen Teilnehmerknoten 3 mit einem RC-Oszillator 7. Vorzugsweise werden nur Datenrahmen 10 von Teilnehmern 3 mit einem Quarz-Oszillator 5 als Kalibrationsnachrichten herangezogen. Um feststellen zu können, von welchem der Teilnehmer 3, 4 ein empfangener Datenrahmen kommt, muss ein System-Programmierer eine Liste von Identifiern (ID) anlegen und den Konfigurations-Parametern des Teilnehmerknotens 3, 4 hinzufügen. Die nachfolgende Feinkalibrierung kann auch auf solche Nachrichten beschränkt werden, die länger als eine vorgebbare Mindestlänge sind. Die Länge einer Nachricht kann einem 4 Bit langen Datenlängenfeld entnommen werden, das Teil des Kontrollfelds (CTRL) 13 des Datenrahmens 10 ist. Mit der Beschränkung der zur Feinkalibrierung verwendeten Nachrichten auf besonders lange Nachrichten ist die Anzahl NB der Bits zwischen den beiden betrachteten Flanken 40, 41 von rezessiv nach dominant besonders groß. Das beschriebene Verfahren der Feinkalibrierung ist umso genauer, je größer die Anzahl NB der Bits zwischen den beiden betrachteten Flanken 40, 41 ist, da der Messfehler von einer Oszillator-Periode 8 sich bei großen Werten für die Anzahl NB prozentual weniger stark auswirkt. In jedem Fall sollte die Feinkalibrierung nur auf fehlerfrei empfangene Nachrichten angewandt werden.

Falls der empfangene Datenrahmen 10 nicht als Kalibrationsnachricht geeignet ist, wird die Nachricht in dem empfangenden Teilnehmerknoten 4 inhaltlich ausgewertet und weiterverarbeitet. Die Nachricht wird jedoch nicht zur Kalibration des Teilnehmers 4 herangezogen. Dann wird wieder zu dem Verfahrensschritt 30 verzweigt und erneut eine Nachricht über den Datenbus 2 empfangen. Je nach Anforderung an die Takt-Toleranz kann auf diese Ausfilterung (Abfrage 32) von Datenrahmen 10, die weniger gut oder gar nicht als Kalibrationsnachricht geeignet sind, auch verzichtet werden.

In einem Verfahrensschritt 33 misst das Kalibrations-Steuerwerk des Teilnehmers 4 in Oszillator-Perioden 8 den Abstand NOPN zwischen einer ersten Flanke 40 (vergleiche Figuren 2 und 3) von rezessiv nach dominant im Datenfeld 14 (oder im Kontrollfeld 13) zu einer letzten Flanke 41 (vergleiche Figuren 2 und 3) von rezessiv nach dominant in dem CRC-Feld 15 in dem empfangenen Datenrahmen 10 und zählt in einem nachfolgenden Verfahrensschritt 34 die Anzahl NB der Bits zwischen diesen beiden Flanken 40, 41. Wenn der Systemtakt 16 nach der Grob-Kalibrierung noch leicht von seinem Idealwert abweicht, werden im Rahmen der Feinkalibration einzelne Bits durch Resynchronisation verlängert oder verkürzt. Das Produkt der Anzahl NB der Bits zwischen den beiden Flanken 40, 41 und der Anzahl NTQ der Systemtakte in einer Bit-Zeit gibt an, wie viele Systemtakt-Perioden 6 gezählt worden wären, wenn der Systemtakt 6 auf seiner Sollfrequenz arbeitete. Der Takt-Teiler 9 wird dann in einem Verfahrensschritt 35 so eingestellt, dass eine Systemtakt-Periode NOPN/(NB·NTQ) Oszillator-Perioden 8 lang ist. Das Kalibrations-Steuerwerk ist nun feinkalibriert; die Feinkalibration ist damit abgeschlossen.

## Patentansprüche

1. Kommunikationssystem (1) umfassend einen Datenbus (2) und mehrere an den Datenbus (2) angeschlossene Teilnehmerknoten (3, 4), wobei eine Datenübertragung über den Datenbus (2) in Datenrahmen (10) mit jeweils mindestens einem Datenfeld (14) und/oder mindestens einem Kontrollfeld (13) und mindestens einem Prüfsummenfeld (15) erfolgt, wobei mindestens einer der Teilnehmer (4) einen hochgenauen Taktgenerator (5) aufweist und die übrigen Teilnehmer (3) einen Taktgenerator (7) mit einer geringeren Genauigkeit als der hochgenaue Taktgenerator (5) aufweisen, und wobei während des Betriebs des Kommunikationssystems (1) an dem Datenbus Kalibrationsnachrichten anliegen und zumindest einer der Teilnehmer (3) mit dem ungenauen Taktgenerator (7) eine Kalibrationsnachricht empfängt und ein Kalibrations-Steuerwerk zur Kalibrierung des ungenauen Taktgenerators (7) auf einen Systemtakt (6) des Datenbusses (2) unter Berücksichtigung von in der empfangenen Kalibrationsnachricht enthaltenen Informationen aufweist, **dadurch gekennzeichnet, dass** die Anzahl NTQ an Systemtakten, die in einer Bit-Zeit enthalten sind, frei konfigurierbar ist, dass das Kalibrations-Steuerwerk dazu geeignet ist, in Oszillator-Perioden (8) einen Abstand NOPN zwischen einer ersten Flanke (40) im Datenfeld (14) oder im Kontrollfeld (13) eines empfangenen Datenrahmens (10) und einer anderen Flanke (41) in einem Feld (13; 14; 15) des empfangenen Datenrahmens (10) zu messen, die Anzahl (NB) der Bits zwischen diesen beiden Flanken (40, 41) zu zählen und einen Takt-Teiler (9), der einen Systemtakt, (6) eines Datenbus-Protokoll-Steuerwerks des mindestens einen Teilnehmers (3) mit dem ungenauen Taktgenerator (7) generiert, so einzustellen, dass eine Systemtakt-Periode NOPN/(NB·NTQ) Oszillator-Perioden (8) ist.

2. Kommunikationssystem (1) nach Anspruch 1, **dadurch gekennzeichnet, dass** das Kalibrations-Steuerwerk dazu geeignet ist, den Abstand (NOPN) zwischen der ersten im Datenfeld (14) oder im Kontrollfeld (13) des empfangenen Datenrahmens (10) auftretenden Flanke (40) und der anderen Flanke (41) zu messen.

3. Kommunikationssystem (1) nach Anspruch 1 oder 2, **dadurch gekennzeichnet, dass** das Kalibrations-Steuerwerk dazu geeignet ist, den Abstand (NOPN) zwischen der ersten Flanke (40) und der anderen Flanke (41) in einem anderen Feld (13; 14; 15), insbesondere in einem Prüfsummenfeld (15), des empfangenen Datenrahmens (10) zu messen.

4. Kommunikationssystem (1) nach Anspruch 3, **dadurch gekennzeichnet, dass** das Kalibrations-Steuerwerk dazu geeignet ist, den Abstand (NOPN) zwischen der ersten Flanke (40) und der letzten in dem Prüfsummenfeld (15) des empfangenen Datenrahmens (10) auftretenden Flanke (41) zu messen.

5. Kommunikationssystem (1) nach einem der Ansprüche 1 bis 4, **dadurch gekennzeichnet, dass** das Kalibrations-Steuerwerk dazu geeignet ist, den Abstand (NOPN) zwischen der ersten Flanke (40) von rezessiv nach dominant und der anderen Flanke (41) von rezessiv nach dominant zu messen.

6. Kommunikationssystem (1) nach einem der Ansprüche 1 bis 5, **dadurch gekennzeichnet, dass** das Datenbus-Protokoll-Steuerwerk des mindestens einen Teilnehmers (4) mit dem ungenauen Taktgenerator (7) während des Empfangs der Kalibrationsnachricht und während der Kalibrierung des ungenauen Taktgenerators (7) in einem eingeschränkten Betriebsmodus gehalten ist, der gegenüber einem normalen Datenbus-Betriebsmodus eine eingeschränkte Fehlerdetektions- und Fehlerbehandlungsfunktionalität bezüglich der über den Datenbus (2) empfangenen Datenrahmen (10) aufweist.

7. Kommunikationssystem (1) nach Anspruch 6, **dadurch gekennzeichnet, dass** in dem eingeschränkten Betriebsmodus ein Fehlerzähler des mindestens einen Teilnehmers (4) mit dem ungenauen Taktgenerator (7) angehalten ist.

8. Kommunikationssystem (1) nach Anspruch 6 oder 7, **dadurch gekennzeichnet, dass** in dem eingeschränkten Betriebsmodus das Zerstören eines über den Datenbus (2) empfangenen und als fehlerhafte Nachricht erkannten Datenrahmens (10) unterbunden ist.

9. Kommunikationssystem (1) nach einem der Ansprüche 6 bis 8, **dadurch gekennzeichnet, dass** in dem eingeschränkten Betriebsmodus der mindestens eine Teilnehmer (4) mit dem ungenauen Taktgenerator (7) eine Nachricht, insbesondere eine Bestätigungsnachricht, sendet, wenn er einen fehlerfreien Datenrahmen (10) über den Datenbus (2) empfangen hat.

10. Kommunikationssystem (1) nach einem der Ansprüche 1 bis 9, **dadurch gekennzeichnet, dass** nur solche Datenrahmen (10) zur Kalibrierung des ungenauen Taktgenerators (7) herangezogen werden, die von Teilnehmern (3) mit einem besonders genauen Taktgenerator (5) ausgesandt wurden.

11. Kommunikationssystem (1) nach einem der Ansprüche 1 bis 10, **dadurch gekennzeichnet, dass** nur solche Datenrahmen (10) zur Kalibrierung des ungenauen Taktgenerators (7) herangezogen werden, die länger als ein vorgebbarer Grenzwert sind.

12. Kommunikationssystem (1) nach einem der Ansprüche 1 bis 11, **dadurch gekennzeichnet, dass** das Kalibrations-Steuerwerk dazu geeignet ist, aus den Messungen des Abstands (NOPN) zwischen der ersten Flanke (40) und der anderen Flanke (41) mehrerer empfangener Datenrahmen (10) einen Mittelwert zu bilden und den Takt-Teiler (9) in Abhängigkeit von diesem Mittelwert einzustellen.

13. Kommunikationssystem (1) nach einem der Ansprüche 1 bis 12, **dadurch gekennzeichnet, dass** das Kalibrations-Steuerwerk dazu geeignet ist, wenn für eine vorgebbare Zeitdauer ein fehlerfreier und zur Kalibrierung des ungenauen Taktgenerators (7) nutzbarer Datenrahmen (10) ausbleibt oder wenn die Anzahl der Resynchronisationen beim Empfang der Datenrahmen (10) über den Datenbus (2) einen vorgebbaren Grenzwert überschreitet, über den Datenbus (2) einen zur Kalibrierung des ungenauen Taktgenerators (7) nutzbaren Datenrahmen (10) anzufordern.

14. Kommunikationssystem (1) nach einem der Ansprüche 1 bis 13, **dadurch gekennzeichnet, dass** die Kalibrierung des ungenauen Taktgenerators (7) des mindestens einen Teilnehmers (4) mit dem ungenauen Taktgenerator (7) eine Feinkalibrierung darstellt, welche nach einer Grobkalibrierung erfolgt.

15. Kommunikationssystem (1) nach Anspruch 14, **dadurch gekennzeichnet**, das Kalibrations-Steuerwerk zur Grobkalibrierung des ungenauen Taktgenerators (7) dazu geeignet ist, in den empfangenen Datenrahmen (10) nach dem in Oszillator-Perioden (8) kleinsten Abstand (NOP2) zwischen zwei aufeinander folgenden Flanken zu suchen, den Abstand (NOP2) als Zeit für zwei Bit-Zeiten heranzuziehen und den Takt-Teiler (9) so einzustellen, dass eine Systemtakt-Periode NOP2/(2·NTQ) Oszillator-Perioden (8) lang ist.

16. Kommunikationssystem (1) nach Anspruch 15, **dadurch gekennzeichnet**, das Kalibrations-Steuerwerk zur Grobkalibrierung des ungenauen Taktgenerators (7) dazu geeignet ist, in den empfangenen Datenrahmen (10) nach dem in Oszillator-Perioden (8) kleinsten Abstand (NOP2) zwischen zwei aufeinander folgenden Flanken von rezessiv nach dominant zu suchen, den Abstand (NOP2) als Zeit für zwei Bit-Zeiten heranzuziehen und den Takt-Teiler (9) so einzustellen, dass eine Systemtakt-Periode NOP2/(2·NTQ) Oszillator-Perioden (8) lang ist.

17. Kommunikationssystem (1) nach einem der Ansprüche 14 bis 16, **dadurch gekennzeichnet, dass** die Grobkalibrierung beendet ist, sobald das Datenbus-Protokoll-Steuerwerk, das mit dem aktuellen grob-eingestellten Systemtakt arbeitet, einen empfangenen Datenrahmen (10) als gültige Nachricht akzeptiert.

18. Kommunikationssystem (1) nach einem der Ansprüche 1 bis 17, **dadurch gekennzeichnet, dass** es als ein CAN-Kommunikationssystem (1) ausgebildet ist.

19. Kommunikationssystem (1) nach Anspruch 18, **dadurch gekennzeichnet, dass** die Datenübertragung über den CAN-Bus (2) nach dem TTCAN-Protokoll erfolgt.

20. Verfahren zum Betreiben eines Kommunikationssystems (1) umfassend einen Datenbus (2) und mehrere an den Datenbus (2) angeschlossene Teilnehmerknoten (3, 4), wobei Daten über den Datenbus (2) in Datenrahmen (10) mit jeweils mindestens einem Datenfeld (14) und/oder mindestens einem Kontrollfeld (13) und mindestens einem Prüfsummenfeld (15) übertragen werden, wobei mindestens einer der Teilnehmer (3) einen hochgenauen Taktgenerator (5) aufweist und die übrigen Teilnehmer (4) einen Taktgenerator (7) mit einer geringeren Genauigkeit als der hochgenaue Taktgenerator (5) aufweisen, und wobei während des Betriebs des Kommunikationssystems (1) über den Datenbus (2) Kalibrationsnachrichten übertragen werden und von zumindest einem der Teilnehmer (4) mit dem ungenauen Taktgenerator (7) eine Kalibrationsnachricht empfangen und der ungenaue Taktgenerator (7) unter Berücksichtigung von in der empfangenen Kalibrationsnachricht enthaltenen Informationen auf einen Systemtakt (6) des Datenbusses (2) kalibriert wird, **dadurch gekennzeichnet, dass** die Anzahl NTQ an Systemtakten, die in einer Bit-Zeit enthalten sind, frei konfigurierbar ist, dass in Oszillator-Perioden (8) ein Abstand NOPN zwischen einer ersten Flanke (40) im Datenfeld (14) oder im Kontrollfeld (13) eines empfangenen Datenrahmens (10) und einer anderen Flanke (41) in einem Feld (13; 14; 15) des empfangenen Datenrahmens (10) gemessen wird, die Anzahl (NB) der Bits zwischen diesen beiden Flanken (40, 41) gezählt wird und ein Takt-Teiler (9), der einen Systemtakt (6) eines Datenbus-Protokoll-Steuerwerks generiert, so eingestellt wird, dass eine Systemtakt-Periode NOPN/(NB·NTQ) Oszillator-Perioden (8) lang ist.

## Claims

1. Communication system (1) comprising a data bus (2) and a plurality of subscriber nodes (3, 4) connected to the data bus (2), wherein data transmission via the data bus (2) is effected in data frames (10) having at least one data field (14) and/or at least one control field (13) and at least one checksum field (15), respectively, wherein at least one of the subscribers (4) has a high-precision clock generator (5) and the remainder of the subscribers (3) have a clock generator (7) having lower precision than the high-precision clock generator (5), and wherein during the operation of the communication system (1) the data bus carries calibration messages and at least one of the subscribers (3) having the imprecise clock generator (7) receives a calibration message and has a calibration control mechanism for calibrating the imprecise clock generator (7) to a system clock (6) of the data bus (2) by taking account of information that the received calibration message contains, **characterized in that** the number NTQ of system clock cycles that a bit time contains is freely configurable, **in that** the calibration control mechanism is suited to measuring, in oscillator periods (8), an interval NOPN between a first edge (40) in the data field (14) or in the control field (13) of a received data frame (10) and another edge (41) in a field (13; 14; 15) of the received data frame (10), to counting the number (NB) of bits between these two edges (40, 41) and to setting a clock divider (9), which generates a system clock (6) for a data bus protocol control mechanism of the at least one subscriber (3) having the imprecise clock generator (7), such that a system clock period is NOPN/(NB·NTQ) oscillator periods (8).

2. Communication system (1) according to Claim 1, **characterized in that** the calibration control mechanism is suited to measuring the interval (NOPN) between the first edge (40) occurring in the data field (14) or in the control field (13) of the received data frame (10) and the other edge (41).

3. Communication system (1) according to Claim 1 or 2, **characterized in that** the calibration control mechanism is suited to measuring the interval (NOPN) between the first edge (40) and the other edge (41) in another field (13; 14; 15), particularly in a checksum field (15), of the received data frame (10).

4. Communication system (1) according to Claim 3, **characterized in that** the calibration control mechanism is suited to measuring the interval (NOPN) between the first edge (40) and the last edge (41) occurring in the checksum field (15) of the received data frame (10).

5. Communication system (1) according to one of Claims 1 to 4, **characterized in that** the calibration control mechanism is suited to measuring the interval (NOPN) between the first edge (40) from recessive to dominant and the other edge (41) from recessive to dominant.

6. Communication system (1) according to one of Claims 1 to 5, **characterized in that** the data bus protocol control mechanism of the at least one subscriber (4) having the imprecise clock generator (7) is kept in a restricted mode of operation during the reception of the calibration message and during the calibration of the imprecise clock generator (7), which mode of operation has a restricted error-detection and error-handling functionality for the data frames (10) received via the data bus (2) in comparison with a normal data bus mode of operation.

7. Communication system (1) according to Claim 6, **characterized in that** in the restricted mode of operation an error counter of the at least one subscriber (4) having the imprecise clock generator (7) has been stopped.

8. Communication system (1) according to Claim 6 or 7, **characterized in that** in the restricted mode of operation the destruction of a data frame (10) that is received via the data bus (2) and that is recognized as an erroneous message is prevented.

9. Communication system (1) according to one of Claims 6 to 8, **characterized in that** in the restricted mode of operation the at least one subscriber (4) having the imprecise clock generator (7) sends a message, particularly a confirmation message, when it has received an error-free data frame (10) via the data bus (2).

10. Communication system (1) according to one of Claims 1 to 9, **characterized in that** only such data frames (10) as have been transmitted by subscribers (3) having a particularly precise clock generator (5) are used for calibrating the imprecise clock generator (7).

11. Communication system (1) according to one of Claims 1 to 10, **characterized in that** only such data frames (10) as are longer than a prescribable limit value are used for calibrating the imprecise clock generator (7).

12. Communication system (1) according to one of Claims 1 to 11, **characterized in that** the calibration control mechanism is suited to forming a mean value from the measurements of the interval (NOPN) between the first edge (40) and the other edge (41) of a plurality of received data frames (10) and to setting the clock divider (9) on the basis of this mean value.

13. Communication system (1) according to one of Claims 1 to 12, **characterized in that** the calibration control mechanism is suited to using the data bus (2) to request a data frame (10) that can be used for calibrating the imprecise clock generator (7) when an error-free data frame (10) that can be used for calibrating the imprecise clock generator (7) is absent for a prescribable period of time or when the number of resynchronization operations during reception of the data frames (10) via the data bus (2) exceeds a prescribable limit value.

14. Communication system (1) according to one of Claims 1 to 13, **characterized in that** the calibration of the imprecise clock generator (7) of the at least one subscriber (4) having the imprecise clock generator (7) is fine calibration, which is effected after coarse calibration.

15. Communication system (1) according to Claim 14, **characterized in that** the calibration control mechanism for coarse calibration of the imprecise clock generator (7) is suited to searching the received data frames (10) for the smallest interval (NOP2) between two successive edges in oscillator periods (8), to using the interval (NOP2) as the time for two bit times and to setting the clock divider (9) such that a system clock period is NOP2/(2·NTQ) oscillator periods (8) long.

16. Communication system (1) according to Claim 15, **characterized in that** the calibration control mechanism for coarse calibration of the imprecise clock generator (7) is suited to searching the received data frames (10) for the smallest interval (NOP2) between two successive edges from recessive to dominant in oscillator periods (8), to using the interval (NOP2) as the time for two bit times and to setting the clock divider (9) such that a system clock period is NOP2/(2·NTQ) oscillator periods (8) long.

17. Communication system (1) according to one of Claims 14 to 16, **characterized in that** the coarse calibration is at an end as soon at the data bus protocol control mechanism that operates with the current coarsely set system clock accepts a received data frame (10) as a valid message.

18. Communication system (1) according to one of Claims 1 to 17, **characterized in that** it is in the form of a CAN communication system (1).

19. Communication system (1) according to Claim 18, **characterized in that** the data transmission via the CAN bus (2) is effected on the basis of the TTCAN protocol.

20. Method for operating a communication system (1) comprising a data bus (2) and a plurality of subscriber notes (3, 4) connected to the data bus (2), wherein data are transmitted via the data bus (2) in data frames (10) having at least one data field (14) and/or at least one control field (13) and at least one checksum field (15), respectively, wherein at least one of the subscribers (3) has a high-precision clock generator (5) and the remainder of the subscribers (4) have a clock generator (7) having lower precision than the high-precision clock generator (5), and wherein during the operation of the communication system (1) calibration messages are transmitted via the data bus (2) and a calibration message is received by at least one of the subscribers (4) having the imprecise clock generator (7), and the imprecise clock generator (7) is calibrated to a system clock (6) of the data bus (2) by taking account of information that the received calibration message contains, **characterized in that** the number NTQ of system clock cycles that a bit time contains is freely configurable, **in that**, in oscillator periods (8), an interval NOPN between a first edge (40) in the data field (14) or in the control field (13) of a received data frame (10) and another edge (41) in a field (13; 14; 15) of the received data frame (10) is measured, the number (NB) of bits between these two edges (40, 41) is counted and a clock divider (9), which generates a system clock (6) for a data bus protocol control mechanism, is set such that a system clock period is NOPN/(NB·NTQ) oscillator periods (8) long.

## Revendications

1. Système de communication (1), comprenant un bus de données (2) et plusieurs noeuds d'abonné (3, 4) raccordés au bus de données (2), une transmission de données ayant lieu par le biais du bus de données (2) dans des trames de données (10) à chaque fois dotées d'au moins un champ de données (14) et/ou d'au moins un champ de contrôle (13) et d'au moins un champ de somme de contrôle (15), au moins l'un des abonnés (4) présentant un générateur d'horloge de grande précision (5) et les autres abonnés (3) présentant un générateur d'horloge (7) ayant une précision inférieure à celle du générateur d'horloge de grande précision (5), et des messages de calibrage étant présents sur le bus de données pendant le fonctionnement du système de communication (1) et au moins l'un des abonnés (3) doté du générateur d'horloge (7) peu précis recevant un message de calibrage et présentant un organe de commande de calibrage destiné à calibrer le générateur d'horloge (7) peu précis sur une horloge système (6) du bus de données (2) en tenant compte des informations contenues dans le message de calibrage reçu, **caractérisé en ce que** le nombre, NTQ, d'horloges système qui sont incluses dans un temps-bit est configurable librement, **en ce que** l'organe de calibrage est conçu pour, dans les périodes d'oscillateur (8), mesurer un écart, NOPN, entre un premier front (40) dans le champ de données (14) ou dans le champ de contrôle (13) d'une trame de données (10) reçue et un autre front (41) dans un champ (13 ; 14 ; 15) de la trame de données (10) reçue, compter le nombre (NB) de bits entre ces deux fronts (40, 41) et régler un diviseur d'horloge (9), lequel génère une horloge système (6) d'un organe de commande de protocole de bus de données de l'au moins un abonné (3) doté du générateur d'horloge (7) peu précis de telle sorte qu'une période de l'horloge système soit égale à NOPN/(NB.NTQ) périodes d'oscillateur (8).

2. Système de communication (1) selon la revendication 1, **caractérisé en ce que** l'organe de commande de calibrage est conçu pour mesurer l'écart (NOPN) entre le premier front (40) survenant dans le champ de données (14) ou dans le champ de contrôle (13) de la trame de données (10) reçue et l'autre front (41).

3. Système de communication (1) selon la revendication 1 ou 2, **caractérisé en ce que** l'organe de commande de calibrage est conçu pour mesurer l'écart (NOPN) entre le premier front (40) et l'autre front (41) dans un autre champ (13 ; 14 ; 15), notamment dans un champ de somme de contrôle (15) de la trame de données (10) reçue.

4. Système de communication (1) selon la revendication 3, **caractérisé en ce que** l'organe de commande de calibrage est conçu pour mesurer l'écart (NOPN) entre le premier front (40) et le dernier front (41) survenant dans le champ de somme de contrôle (15) de la trame de données (10) reçue.

5. Système de communication (1) selon l'une des revendications 1 à 4, **caractérisé en ce que** l'organe de commande de calibrage est conçu pour mesurer l'écart (NOPN) entre le premier front (40) de récessif vers dominant et l'autre front (41) de récessif vers dominant.

6. Système de communication (1) selon l'une des revendications 1 à 5, **caractérisé en ce que** l'organe de commande de protocole de bus de données de l'au moins un abonné (4) doté du générateur d'horloge (7) peu précis, pendant la réception du message de calibrage et pendant le calibrage du générateur d'horloge (7) peu précis, est maintenu dans un mode de fonctionnement limité qui, par rapport à un mode de fonctionnement normal du bus de données, présente une fonctionnalité de détection d'erreurs et de traitement des erreurs limitée concernant les trames de données (10) reçues par le biais du bus de données (2).

7. Système de communication (1) selon la revendication 6, **caractérisé en ce que** dans le mode de fonctionnement limité, un compteur d'erreurs de l'au moins un abonné (4) doté du générateur d'horloge (7) peu précis est arrêté.

8. Système de communication (1) selon la revendication 6 ou 7, **caractérisé en ce que** dans le mode de fonctionnement limité, la destruction d'une trame de données (10) reçue par le biais du bus de données (2) et identifiée comme message erronéd est inhibé.

9. Système de communication (1) selon l'une des revendications 6 à 8, **caractérisé en ce que** dans le mode de fonctionnement limité, l'au moins un abonné (4) doté du générateur d'horloge (7) peu précis envoie un message, notamment un message de confirmation, lorsqu'il a reçu une trame de données (10) exempte d'erreur par le biais du bus de données (2).

10. Système de communication (1) selon l'une des revendications 1 à 9, **caractérisé en ce que** seules sont utilisées pour le calibrage du générateur d'horloge (7) peu précis les trames de données (10) qui ont été envoyées par les abonnés (3) dotés d'un générateur d'horloge particulièrement précis (5).

11. Système de communication (1) selon l'une des revendications 1 à 10, **caractérisé en ce que** seules sont utilisées pour le calibrage du générateur d'horloge (7) peu précis les trames de données (10) qui sont plus longues qu'une valeur limite pouvant être prédéfinie.

12. Système de communication (1) selon l'une des revendications 1 à 11, **caractérisé en ce que** l'organe de commande de calibrage est conçu pour calculer une valeur moyenne à partir des mesures de l'écart (NOPN) entre le premier front (40) et l'autre front (41) de plusieurs trames de données (10) reçues et pour régler le diviseur d'horloge (9) en fonction de cette valeur moyenne.

13. Système de communication (1) selon l'une des revendications 1 à 12, **caractérisé en ce que** l'organe de commande de calibrage est conçu pour, si une trame de données (10) exempte d'erreur et utilisable pour le calibrage du générateur d'horloge (7) peu précis fait défaut pendant une durée pouvant être prédéfinie ou si le nombre de resynchronisations lors de la réception des trames de données (10) par le biais du bus de données (2) dépasse une valeur limite pouvant être prédéfinie, solliciter par le biais du bus de données (2) une trame de données (2) utilisable pour le calibrage du générateur d'horloge (7) peu précis.

14. Système de communication (1) selon l'une des revendications 1 à 13, **caractérisé en ce que** le calibrage du générateur d'horloge (7) peu précis de l'au moins un abonné (4) doté du générateur d'horloge (7) peu précis représente un calibrage fin qui est effectué après un calibrage approximatif.

15. Système de communication (1) selon la revendication 14, **caractérisé en ce que** l'organe de commande de calibrage destiné au calibrage approximatif du générateur d'horloge (7) peu précis est conçu pour rechercher dans les trames de données (10) reçues le plus petit écart (NOP2) entre deux fronts successifs dans les périodes d'oscillateur (8), utiliser l'écart (NOP2) comme temps pour deux temps-bits et régler le diviseur d'horloge (9) de telle sorte qu'une période de l'horloge système ait une longueur égale à NOP2/(2.NTQ) périodes d'oscillateur (8).

16. Système de communication (1) selon la revendication 15, **caractérisé en ce que** l'organe de commande de calibrage destiné au calibrage approximatif du générateur d'horloge (7) peu précis est conçu pour rechercher dans les trames de données (10) reçues le plus petit écart (NOP2) entre deux fronts successifs de récessif vers dominant dans les périodes d'oscillateur (8), utiliser l'écart (NOP2) comme temps pour deux temps-bits et régler le diviseur d'horloge (9) de telle sorte qu'une période de l'horloge système ait une longueur égale à NOP2/(2.NTQ) périodes d'oscillateur (8).

17. Système de communication (1) selon l'une des revendications 14 à 16, **caractérisé en ce que** le calibrage approximatif est terminé dès que l'organe de commande de protocole de bus de données qui fonctionne avec l'horloge système réglée actuellement de façon approximative accepte une trame de données (10) reçue comme message valide.

18. Système de communication (1) selon l'une des revendications 1 à 17, **caractérisé en ce qu'**il est réalisé sous la forme d'un système de communication CAN (1).

19. Système de communication (1) selon la revendication 18, **caractérisé en ce que** la transmission de données sur le bus CAN (2) s'effectue selon le protocole TTCAN.

20. Procédé d'exploitation d'un système de communication (1) comprenant un bus de données (2) et plusieurs noeuds d'abonné (3, 4) raccordés au bus de données (2), des données étant transmises par le biais du bus de données (2) dans des trames de données (10) à chaque fois dotées d'au moins un champ de données (14) et/ou d'au moins un champ de contrôle (13) et d'au moins un champ de somme de contrôle (15), au moins l'un des abonnés (3) présentant un générateur d'horloge de grande précision (5) et les autres abonnés (4) présentant un générateur d'horloge (7) ayant une précision inférieure à celle du générateur d'horloge de grande précision (5), et des messages de calibrage étant transmis par le biais du bus de données (2) pendant le fonctionnement du système de communication (1) et un message de calibrage étant reçu par au moins l'un des abonnés (4) doté du générateur d'horloge (7) peu précis et le générateur d'horloge (7) peu précis étant calibré sur une horloge système (6) du bus de données (2) en tenant compte des informations contenues dans le message de calibrage reçu, **caractérisé en ce que** le nombre, NTQ, d'horloges système qui sont incluses dans un temps-bit est configurable librement, **en ce que** dans les périodes d'oscillateur (8) est mesuré un écart, NOPN, entre un premier front (40) dans le champ de données (14) ou dans le champ de contrôle (13) d'une trame de données (10) reçue et un autre front (41) dans un champ (13 ; 14 ; 15) de la trame de données (10) reçue, le nombre (NB) de bits entre ces deux fronts (40, 41) est compté et un diviseur d'horloge (9), lequel génère une horloge système (6) d'un organe de commande de protocole de bus de données, est réglé de telle sorte qu'une période de l'horloge système ait une longueur égale à NOPN/(NB.NTQ) périodes d'oscillateur (8).
